# EUROPEAN PATENT SPECIFICATION

(11) **EP 3 257 780 B1**
(45) Date of publication and mention of the grant of the patent: **03.10.2018**
(21) Application number: 16711904.9
(22) Date of filing: 11.02.2016
(51) Int. Cl.: B65D 75/32, A47J 31/40, A47J 31/44

(54) **SUPPLY CARTRIDGE WITH BINARY CODE, BEVERAGE PREPARATION MACHINE AND PROCESS FOR OPERATION OF A MACHINE USING SAID SUPPLY CARTRIDGE**
ZUFÜHRKARTUSCHE MIT BINÄRCODE, GETRÄNKEHERSTELLUNGSMASCHINE UND VERFAHREN ZUM BETRIEB EINER MASCHINE UNTER VERWENDUNG VON BESAGTER ZUFÜHRKARTUSCHE
CARTOUCHE D'ALIMENTATION À CODE BINAIRE, MACHINE DE PRÉPARATION DE BOISSONS ET PROCÉDÉ DE FONCTIONNEMENT D'UNE MACHINE UTILISANT LADITE CARTOUCHE D'ALIMENTATION

(30) Priority: 11.02.2015 PT 15108210
(43) Date of publication of application: 20.12.2017
(73) Proprietor: Novadelta - Comércio e Indústria de Cafés S.A., 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2016/050005
(87) International publication number: WO 2016/130036

(56) References cited:
- EP-A1- 0 457 708
- DE-A1- 19 938 298
- DE-A1-102006 004 329
- US-A- 2 358 246
- US-A- 5 555 790

## Description

### FIELD OF THE INVENTION

The present invention refers to the field of supply cartridges adapted for collection of a support of single portions, provided as a flexible strip-like support, or similar, and presenting a plurality of single dose portions of an edible substance disposed successively along a respective longitudinal direction.

The present invention further refers to a machine according to claim 10, for preparing beverages adapted for using a supply cartridge of the type of the present invention, as well as to a process according to claim 13, for preparing beverages by means of a machine and supply cartridge of the type of the present invention.

### BACKGROUND OF THE INVENTION

The prior art includes several solutions relating to beverage preparation machines based on edible substances, and adapted so as to process a plurality of single doses provided in a strip-like or similar support that is displaced out of a supply cartridge so as to successively supply an extraction device adapted so as to extract a respective beverage.

Document GB 2288972 B discloses a supply cartridge according to the preamble of claim 1. This document discloses a support of single portions that presents holes in the peripheral side zones of all dividing regions between successive single doses, whereby said holes are adapted so as to engage in corresponding engagement elements of an actuation device provided in a corresponding machine for preparing beverages.

Document US 5,555,790 also discloses a support configured in a strip from and presenting a plurality of single doses, whereby said strip presents in each dividing region between single dose portions, a first set of holes with a given form and dimension and a second set formed by a single hole of different form and dimension of the holes of said first set, whereby said holes are adapted to provide a better positioning and fixation of the strip relative to a mechanic interface.

Document EP 0457708 A1 also discloses a cartridge and a machine, according to the preambles of claims 1 and 10, respectively, and relates to bands of support of single portions of ground coffee adapted to feed an express coffee machine, whereby said support bands present attachment means at respective edges so as to ensure a continuous supply of the coffee machine by a series of support bands.

Document DE 10 2006 004329 A1 relates to a device and cartridge for the preparation of hot beverages. In particular a device for preparation of hot beverages comprises an optical recognition unit for reading a code provided in replaceable cartridges, said unit comprising at least a radiation emitter and a radiation receiver, and said code being provided as a transmission pattern.

Document WO 2013/169134 A2 filed by the applicant of the present invention, discloses a machine for preparing beverages of the same type and adapted for processing a support of conduction that provides a substantially hermetic envelope to a plurality of single doses.

### GENERAL DESCRIPTION OF THE INVENTION

The objective of the present invention is to provide a supply cartridge comprising a package, provided for example in a generally parallelepiped form so that can collect a strip-like support, or similar, common to multiple single portions, and adapted for use in a machine for preparing beverages, such as for example espresso type coffee, tea and similar, notably by means of extraction of aromatic substances packaged in said single dose portions, whereby said support of single portions provides simple and reliable information means, in the form of code, which provides at least one information parameter associated to the type of aromatic substance and the relative position of certain single dose portions along the extension of said support of single portions.

This objective is solved according to the present invention by means of a supply cartridge according to claim 1.

In particular, said objective is solved according to the present invention by means of a support of single portions that presents a plurality of holes disposed along a single cross alignment in the dividing region between successive single dose portions, whereby said holes vary in number or at least one respective dimensional parameter, at least between two dividing regions, preferentially non consecutive, of single dose portions along the extension of said support.

According to a preferred embodiment, the supply cartridge further presents an information device, preferentially of RFID type, whereby said information device is provided in a front face and in the same relative position of the cartridge in relation to the front zone of a collection disposition provided in a machine for preparing beverages.

Another objective of the present invention is to provide a machine for preparing beverages adapted for using a supply cartridge comprising a support of single portions, and that provides means for apprehending an information code provided in said support of single portions so as to improve the operation of said machine.

This objective is solved according to the present invention by means of a machine for preparing beverages according to claim 10.

Another objective of the present invention is to provide a process for preparing beverages by means of a machine for preparing beverages adapted for using a cartridge comprising a support of single portions, and that includes the apprehension of information provided in said support of single portions and respective use by a control device of a machine for preparing beverages.

This objective is solved according to the present invention by means of a process according to claim 13.

### Description of the Figures

The invention shall now be explained in greater detail based upon preferred embodiments thereof and the Figures attached.

The Figures show, in simplified schematic representations:
- Figure 1:: top view of a support (2) of single portions (on the left-side) and side view of a single dose portion (21) (on the right-side) according to prior art;
- Figure 2:: side view (on the top, left-side) and front view (on the top, right-side), as well as detail P01 (on the bottom), of a machine (10) for preparing beverages according to prior art, adapted for using a supply cartridge (1) that includes a support (2) of single portions according to Figure 1;
- Figure 3:: top views of two preferred embodiments of a support (2) of single portions of a supply cartridge (1) according to the present invention;
- Figure 4:: top views of two preferred embodiments of a support (2) of single portions of a supply cartridge (1) according to the present invention;
- Figure 5:: top views of two preferred embodiments of a support (2) of single portions of a supply cartridge (1) according to the present invention;
- Figure 6:: side view (left-side) and front view of a machine for preparing beverages (10) with a first embodiment of a supply cartridge (1) according to the present invention;
- Figure 7:: side view (left-side) and front view of a machine (10) for preparing beverages with a second embodiment of a supply cartridge (1) according to the present invention;
- Figure 8:: side view of a code reading device provided in a machine (10) for preparing beverages according to the present invention.

### Description of preferred embodiments of the invention

As referred above, there are known several solutions in the prior art of supply cartridges (1) adapted for use in a machine (10) for preparing beverages and collecting a strip-like, or similar, support (2) of single portions inside thereof, and presenting a plurality of single dose portions (22) provided successively along a respective extension (E).

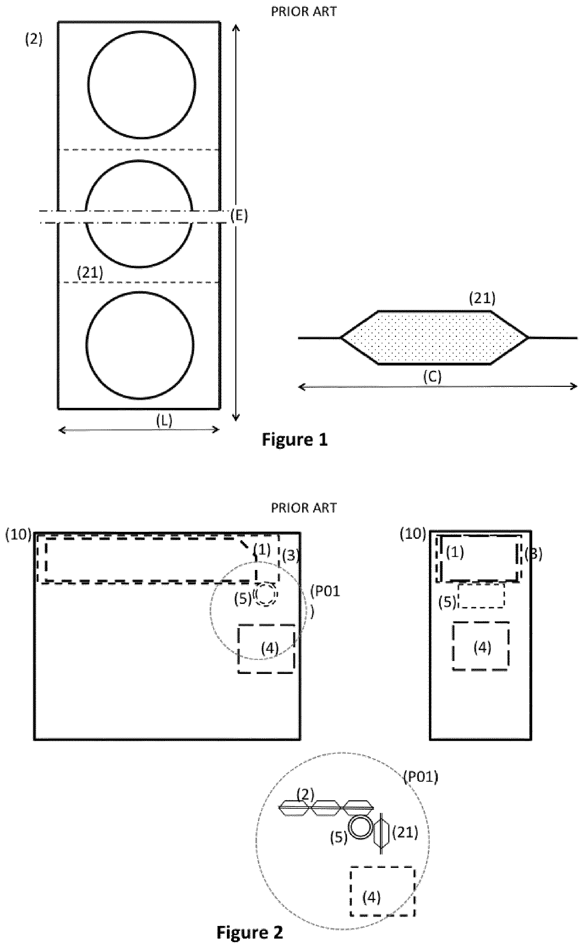

**Figure 1** represents views of a support (2) of single portions according to the prior art, whereby said single dose portions (21) present a length (C) along the direction of said extension (E), and a width (L) along a cross direction.

**Figure 2** represents a machine (10) for preparing beverages according to the prior art, adapted so as to use a supply cartridge (1) that comprises a support (2) of single portions of the type represented in Figure 1. As one can observe, said machine (10) presents at least one collection disposition (3) adapted to fixate said supply cartridge (1), at least one extraction device (4) adapted so that can collect said single dose portion (21) inside thereof, and at least one actuation device (5) disposed downstream of said supply cartridge (1) and upstream of said extraction device (4) and provided so that can move said support (2) of single doses by means of rotation and thereby supply respective single dose portions (21) successively to said extraction device (4).

In particular, as one can better observe in detail P01 of Figure 2, said actuation device (5) is adapted so that can rotate and that way exert a traction force upon a downstream edge of said support (2) of single portions, thereby moving the furthest downstream single dose portion (21) from a substantially horizontal displacement direction to a substantially vertical displacement direction, to a position where it is separated from the remaining support (2) of single portions and falls under the action of the gravity force inside of said extraction device (4).

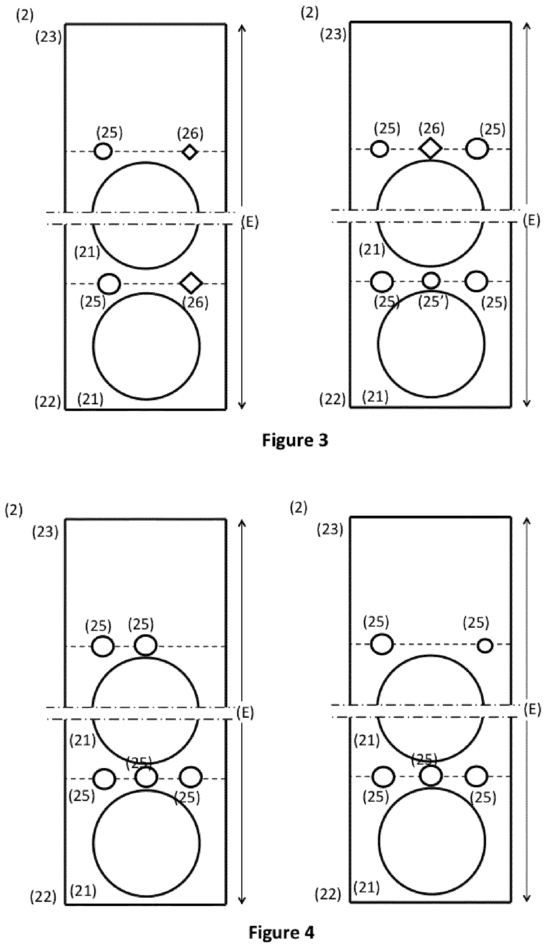

**Figure 3** represents a first set of embodiments of a support (2) of single portions contained in a supply cartridge (1) according to the present invention.

As one can observe, in both cases said support (2) of single portions presents holes (25, 26) in the dividing region between successive single dose portions (21). In particular, according to a first inventive aspect, there are provided at least two holes of different form (25, 26) and/ or dimensions (25, 25') (drawing on the left-side), so that a code can be individually recognized as a result of the variation of a beam of light projected upon them by information apprehension means (7) provided in the machine (10), as shall be described in greater detail further below.

In this respect, at least one of said holes (26) can present a geometric form that varies for example in the case of a given type of beverage, such as coffee, tea, or other edible substance. Moreover, as depicted in the embodiment represented on the left side, said holes (25, 26) present a decreasing dimension along the support extension (E), so that this provides an indication on the part thereof that has already been used and, therefore, the number of single dose portions (21) still remaining.

According to the invention, said holes (25, 26) are provided in a single cross alignment in dividing regions between successive single dose portions (21), at least in the dividing region between a first and a second single dose portion (21). According to another preferred embodiment, said holes (25, 26) are provided in only part of the dividing regions between successive single dose portions (21) along the support extension (E) of said support (2) of single portions.

Alternatively, according to said inventive aspect, the support (2) of single portions presents at least three holes (25, 25', 26) of different or similar form and/or dimension (drawing on the right side). In this case, in a first region there are provided two holes (25) of similar form and a characteristic dimension and one hole (25') of different dimension, in this case a diameter. This variation can serve to identify the total number of single dose portions (21) available in that support (2) of single portions and, therefore, in the respective supply cartridge (1).

According to a preferred embodiment, at least one of said holes (26) can therefore present a different form in at least one upstream disposition of holes (25, 26), so as to convey other type of relevant information to a respective beverage preparation process.

**Figure 4** represents a second set of embodiments of a support (2) of single portions contained in a cartridge (1) according to the present invention.

In a first embodiment (drawing on the left), the support (2) of single portions presents a sequence of three holes (25) at given reference positions along a respective extension (E), whereby said sequence can vary for example so that one of said holes (25) is absent in at least one dividing region between successive single dose portions (21).

In the case of a second embodiment (drawing on the right side), there is provided a variation of the number and of the dimension of some of said holes (25). As it shall be readily understood, it is herewith provided a binary code whereby a given information parameter is associated with a given set or sequence of holes (25).

In dimensional terms, according to a preferred embodiment, said support (2) of single portions presents a plurality of single does portions (21) with a length (C) between 40 and 70 mm, preferentially between 50 and 60 mm. moreover, said support (2) of single portions presents between 10 to 120 single dose portions (21), preferentially between 20 to 80 single dose portions along a respective extension (E).

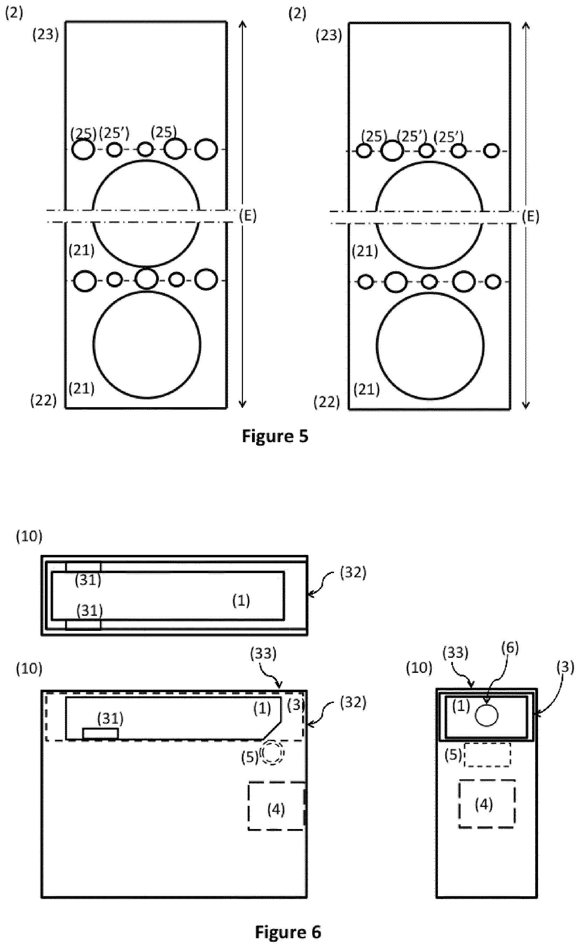

**Figure 5** represents a third set of embodiments of a support (2) of single portions contained in a supply cartridge (1) according to the present invention.

In this case, both supports (2) of single portions comprise five reference positions presenting holes (25, 25') in dividing regions between successive single dose portions (21), whereby there is provided a variation of the number and relative position of the holes (25') of different dimension in each one of said regions (considering the sequence of holes (25, 25') from the left to the right).

In a first case (drawing on the left-side), the holes (25) that present a smaller characteristic dimension are provided in second and fourth positions, whereas in a second case (drawing on the right-side) the holes (26) are provided in a first, third and fifth position. As in the previous case, also in this case the supports (2) of single portions can be used for different types of beverages.

Moreover, according to another preferred embodiment, at least some of said holes (25) are adapted so as to engage with corresponding engaging elements, in particular with traction pins (not represented) provided in the actuation device (5), so as to provide a more efficient transfer of the traction force to said support (2) of single portions. Considering the width of the support (2) of single portions, this solutions advantageously increases the efficiency and reliability of transfer of movement to the support (2) of single portions, so that it is preferred when there are provided at least two holes (25) for engagement and the remaining holes for representation of information in the form of a binary code.

**Figure 6** represents a first embodiment of a machine (10) for preparing beverages and adapted for using a supply cartridge (1) of the type of the present invention. In particular, the machine (10) presents a collection disposition (3) configured in a form that substantially corresponds to the form of the base zone of said types of supply cartridges (1, 1'), in particular to the respective width (W) and depth (D). In this case, said collection disposition (3) is configured with the form of a substantially parallelepiped box.

According to a preferred embodiment, a first type of supply cartridge (1) can be completely collected inside of said collection disposition (3) and temporarily closed in the front and top faces thereof. In particular, said collection disposition (3) presents front (32) and top parts (33) adapted so that it can be fixated in removable manner or so that it can be rotated around an axis, thereby facilitating the placement of at least one type of cartridge, preferentially of at least two types of supply cartridges (1, 1').

As one can also observe, said supply cartridge (1) further presents an information device (6), provided for example in the form of a RFID or similar, and disposed in the front face thereof so that said information device (6) can be read by a device adapted correspondingly and disposed in said front part.

Moreover, according to another inventive aspect, said collection disposition (3) presents fixation means (31) disposed inside and adapted so that they exert an elastic pressure upon at least part of the side faces of said supply cartridges (1, 1'). In the case of the represented embodiment, said fixation means (31) are provided in a U-like form, with the opening oriented towards the front zone and adapted so that exert an elastic pressure upon the side faces of the supply cartridge (1). This type of fixation advantageously provides a rapid placement of the supply cartridge (1) in position, without requiring a particular intervention by a user. Moreover, this type of solution provides a sufficient fixation of the supply cartridge (1) relative to the traction force exerted in the front zone of the supply cartridge (1) upon a support (2) of single portions, so that the movement of the latter is more efficient and reliable.

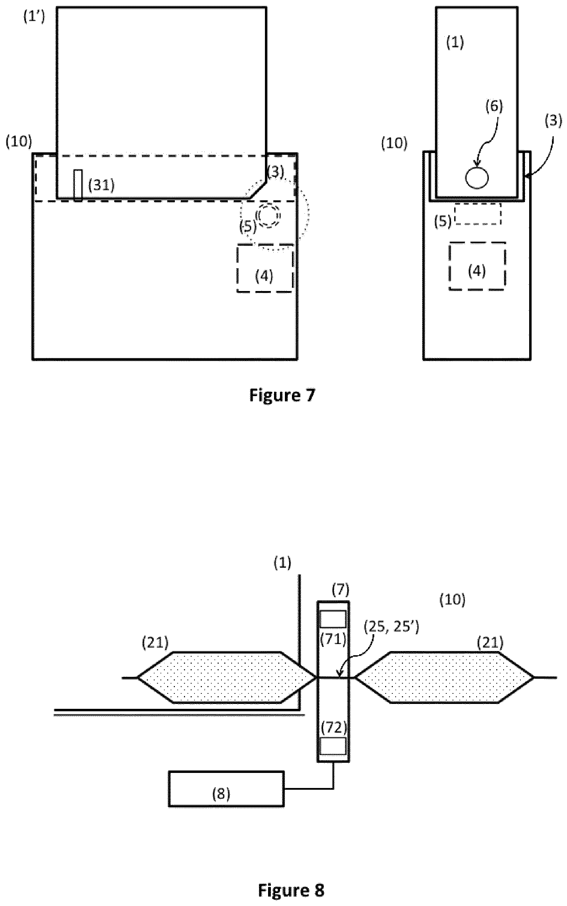

**Figure 7** represents a second embodiment of the collection disposition (3).

According to this preferred embodiment, said fixation means (31) are provided as at least one pair of fixation means (31) disposed in opposition, at least at a distal region of said collection disposition (3) relative to the front part of the machine (10). Said fixation means (31) are provided as elastic elements adapted so that they are elastically deformed at the time of placing of a supply cartridge (1), thereby exerting an elastic pressure force upon the side faces of said supply cartridge (1). According to a preferred embodiment, said fixation means (31) present an extension of at least 1 cm, preferentially at least 2 cm, along the direction of depth (D) of said machine (10) for preparing beverages.

**Figure 8** shows a simplified detail view of the machine (10) according to the present invention, between the exit of the supply cartridge (1) and the actuation device (5).

In particular, the machine (10) presents information apprehension means (7) adapted so that they can recognize the number and/or dimension and/or form of the holes (25, 25') provided in said support (2) of single portions, preferentially disposed in the region between at least part of successive single dose portions (21), whereby said information apprehension means (7) are provided in functional connection with a control device (8) of said machine (10).

According to a preferred embodiment, said information apprehension means (7) are disposed in a region downstream of the exit of said supply cartridge (1), preferentially between said collection disposition (3) and an actuation device (5) and comprise lighting means (71) adapted so as to light up said support (2) of single portions and image collection means (72) adapted so as to recognize at least the number of holes (25), preferentially also the form and/or dimension of the holes (25) in each respective position.

According to another preferred embodiment, said lighting means (71) are provided underneath or above of the passage region of said support (2) of single portions and said image collection means (72) are provided in direct opposition to said lighting means (71), on the other side of said passage region.

A process of preparation of beverages based upon said machine (10) thus includes the steps of actuating said information apprehension means (7), provided downstream of the exit of said supply cartridge (1), so as to collect information provided in the form of a binary code, in the dividing region between successive single dose portions (21), and communicating at least one respective information parameter to a control device (8) of said machine (10).

According to a preferred embodiment, said step of actuation of the information apprehension means (7) is initialized after each actuation of said actuation device (5), so as to apprehend the information that is coded in the holes (25, 26) provided between successive single dose portions (21).

## Claims

1. **Supply cartridge** (1) comprising a package housing a support (2) of single portions,
whereby said support (2) of single portions is provided in a strip-like form, with a support extension (E) and comprising a plurality of single dose portions (21) containing at least one edible substance,
whereby said support (2) of single portions is provided with a first downstream edge (22) in the proximity of a corner of the package where the cartridge (1) provides an exit opening, and whereby said support (2) of single portions presents a plurality of holes (25, 25', 26) adapted so as to provide regions of different light transmission relative to the remaining support (2) of single portions, wherein said support (2) of single portions presents the plurality of holes (25, 25', 26) disposed along a single cross alignment at least in a first and second dividing region between successive single dose portions (21), **characterised in that** at least one of said holes (25, 25', 26) presents at least a different number, a different form or a different dimension, in at least part of said dividing regions between successive single dose portions (21), so that said holes (25, 25', 26) provide a machine readable code.

2. Supply cartridge (1) according to claim 1, **characterized in that** said support (2) of single portions presents at least two holes (25, 25', 26) of different forms, including a circular type (25, 25') and a polygonal type (26), at least in a first and in a second dividing region between successive single dose portions (21).

3. Supply cartridge (1) according to claims 1 or 2, **characterized in that** said support (2) of single portions presents at least two holes (25, 25') of similar form and different dimensions, at least in a first and in a second dividing region between successive single dose portions (21).

4. Supply cartridge (1) according to claims 1 to 3, **characterized in that** said support (2) of single portions presents said holes (25, 25', 26) in reference positions at equidistant distances between each other, and **in that** at least one of said positions does not present a hole (25, 25', 26) in at least one of said reference positions, so that each sequence of holes in respective positions corresponds to a position of a code of binary form.

5. Supply cartridge (1) according to claims 1 to 4, **characterized in that** said support (2) of single portions does not present holes (25, 25', 26) in some dividing regions between successive single dose portions (21).

6. Supply cartridge (1) according to claims 1 to 5, **characterized in that** said support (2) of single portions presents holes (25, 25', 26) in dividing regions intercalated between a plurality of successive single dose portions (21).

7. Supply cartridge (1) according to claims 1 to 6, **characterized in that** said holes (25, 25', 26) present a characteristic dimension, including diameter or cross dimension, of at least 0,5 mm, preferentially at least 1 mm.

8. Supply cartridge (1) according to claims 1 to 7, **characterized in that** said support (2) of single portions presents a width (L) comprised between 40 and 60 mm, preferentially between 45 and 55 mm and **in that** said support (2) of single portions presents a plurality of single dose portions (21) with a length (C) between 40 and 70 mm, preferentially between 50 and 60 mm.

9. Supply cartridge (1) according to any one of claims 1 to 8, **characterized in that** said support (2) of single portions presents between 10 and 120 single dose portions (21), preferentially between 20 and 80 single dose portions along a respective extension (E).

10. **Machine (10)** for preparing beverages, presenting:
- a collection disposition (3) adapted for collecting at least one type, preferentially at least two types of supply cartridges (1, 1') of different dimensions, according to any of claims 1 to 9,
- an actuation device (5) which can pull said support (2) of single portions, **characterized in that** the machine (10) presents information apprehension means (7) which can recognize at least one of the number, dimension and form of holes (25, 25', 26) provided in dividing regions between successive single dose portions (21) along said support (2) of single portions of the cartridge (1) according to any of claims 1 to 9, whereby said information reading means (7) are provided in functional connection with a control device (8) of said machine (10).

11. Machine (10) according to claim 10, **characterized in that** said information apprehension means (7) are provided in a downstream region at the exit of the cartridge (1), preferentially between said collection disposition (3) and the actuation device (5), and comprise lighting means (71) adapted to light up said support (2) of single portions, and image collection means (72) adapted to recognize at least one of the number, form and dimension of the holes (25, 25', 26) in each respective position.

12. Machine (10) according to claim 11, **characterized in that** said lighting means (71) are provided underneath or above a passage region of said support (2) of single portions and said image collection means (72) are provided in direct opposition to said lighting means (71), on the other side of said passage region.

13. **Process** of preparation of a beverage, comprising the steps:
- providing a machine (10) for preparing beverages, in particular a machine (10) for preparing beverages that presents an actuation device (5) which can rotate around a horizontal axis and which is disposed upstream of an extraction device (4);
- providing a supply cartridge (1) according to any of claims 1 to 9, comprising the support (2) of single portions in the strip-like form, and presenting the plurality of single dose portions (21);
- placing said supply cartridge (1) in a collection disposition (3) of said machine (10), preferentially by means of at least one elastic retention inside of said collection disposition (3);
- placing a single dose portion (21) that is furthest downstream in said support (2) of single portions in interaction with an exterior surface of said actuation device (5),
- actuating said actuation device (5) in a rotation movement displacing said support (2) of single portions by means of traction,
- actuating information apprehension means (7) provided downstream of the exit of said supply cartridge (1) and upstream of said extraction device (4), so as to collect at least one information parameter in the form of binary code as a function of a least one of the number, a sequence, the dimension and the form of the holes (25, 25', 26) provided in the dividing regions between the successive single dose portions (21), and
- communicating at least one information parameter to a control device (8) of said machine (10).

14. Process according to claims 13, **characterized in that** said step of actuating information apprehending means (7) is initialized after each actuation of said actuation device (5).

15. Process according to claims 13 or 14, **characterized in that** the steps are repeated for each beverage preparation cycle, by means of rotating said actuation device (5) so as to correspond to the advancement by one position in each operation cycle.

## Patentansprüche

1. Patronenversorgung (1) umfassend eine Packung unterbringend eine Stütze (2) von Einzelmengen, wobei genannte Stütze (2) von Einzelmengen in einer streifenähnlichen Form vorhanden ist, mit einer Stützenerweiterung (E) und umfassend eine Mehrzahl von Einzeldosierungen (21) beinhaltend mindestens eine essbare Substanz,
wobei genannte Stütze (2) von Einzelmengen mit einer ersten Kante stromabwärts (22) in der Nähe von einer Packungsecke vorhanden ist, wo die Patrone (1) eine Ausgangsöffnung versorgt, und
wobei genannte Stütze (2) von Einzelmengen eine Mehrzahl an Löchern (25, 25', 26) aufweist so angepasst, um Bereiche von verschiedenen Lichtübermittlungen gegenüber der restlichen Stütze (2) von Einzelmengen zu versorgen, wobei genannte Stütze (2) von Einzelmengen eine Mehrzahl an Löchern (25, 25', 26) aufweist, angeordnet entlang einer einzelnen Kreuzausrichtung mindestens in einem ersten und zweiten teilenden Bereich zwischen aufeinanderfolgenden Einzeldosierungen (21) **dadurch gekennzeichnet, dass** mindestens eins der Löcher (25, 25', 26) mindestens eine verschiedene Nummer, eine verschiedene Form oder eine verschiedene Dimension aufweist, mindestens teils genannter teilenden Regionen zwischen aufeinanderfolgenden Einzeldosierungen (21) so, dass genannte Löcher (25, 25', 26) einen maschinenlesbaren Code versorgen.

2. Patronenversorgung (1) gemäß Anspruch 1 **dadurch gekennzeichnet, dass** genannte Stütze (2) von Einzelmengen mindestens zwei Löcher (25, 25', 26) aus verschiedenen Formen aufweist, beinhaltend ein kreisförmiges Modell (25, 25') und ein mehreckiges Modell (26), mindestens in einem ersten und in einem zweiten teilenden Bereich zwischen aufeinanderfolgenden Einzeldosierungen (21).

3. Patronenversorgung (1) gemäß Anspruch 1 oder 2 **dadurch gekennzeichnet, dass** genannte Stütze (2) von Einzelmengen mindestens zwei Löcher (25, 25') aus ähnlicher Form und verschiedenen Dimensionen aufweist, mindestens einen ersten und in einen zweiten teilenden Bereich zwischen aufeinanderfolgenden Einzeldosierungen (21).

4. Patronenversorgung (1) gemäß Ansprüche 1 bis 3 **dadurch gekennzeichnet, dass** genannte Stütze (2) von Einzelmengen genannte Löcher (25, 25', 26) aufweist hinsichtlich der Positionen in gleich weit gelegten Entfernungen zwischen einander und dass mindestens eine der genannten Positionen kein Loch (25, 25', 26) aufweist in mindestens einer der genannten Positionen so, dass jede Lochfolge hinsichtlich der Positionen einer binärförmigen Codeposition entspricht.

5. Patronenversorgung (1) gemäß Ansprüche 1 bis 4 **dadurch gekennzeichnet, dass** genannte Stütze (2) von Einzelmengen keine Löcher (25, 25', 26) aufweist in einigen teilenden Bereichen zwischen aufeinanderfolgenden Einzeldosierungen (21) .

6. Patronenversorgung (1) gemäß Ansprüche 1 bis 5 **dadurch gekennzeichnet, dass** genannte Stütze (2) von Einzelmengen Löcher (25, 25', 26) in teilenden Bereichen aufweist, eingelagert zwischen einer Mehrzahl von aufeinanderfolgenden Einzeldosierungen (21).

7. Patronenversorgung (1) gemäß Ansprüche 1 bis 6 **dadurch gekennzeichnet, dass** genannte Löcher (25, 25', 26) eine arteigene Dimension aufweist, einschließlich Diameter oder Kreuzdimension von mindestens 0,5 mm, vorzugsweise mindestens 1 mm.

8. Patronenversorgung (1) gemäß Ansprüche 1 bis 7 **dadurch gekennzeichnet, dass** genannte Stütze (2) von Einzelmengen eine Weite (L) umfasst zwischen 40 und 60 mm, vorzugsweise zwischen 45 und 55 mm, und dass gennante Stütze (2) von Einzelmengen eine Mehrzahl von Einzeldosierungen (21) mit einer Länge (C) zwischen 40 und 70 mm, vorzugsweise zwischen 50 und 60 mm, aufweist.

9. Patronenversorgung (1) gemäß einer der Ansprüche 1 bis 8 **dadurch gekennzeichnet, dass** genannte Stütze (2) von Einzelmengen zwischen 10 und 120 Einzeldosierungen (21) aufweist, vorzugsweise zwischen 20 und 80 Einzeldosierungen entlang einer entsprechenden Erweiterung (E).

10. **Maschine (10)** zur Getränkezubereitung aufweisend:
- eine Sammelanordnung (3) angepasst zur Sammlung mindestens eines Modells, vorzugsweise mindestens zwei Modelle von Patronenversorgungen (1, 1') aus verschiedenen Dimensionen gemäß einer der Ansprüche 1 bis 9,
- ein Antriebsgerät (5), welches genannte Stütze (2) von Einzelmengen ziehen kann
**dadurch gekennzeichnet, dass** die Maschine (10) Informationserfassungsmittel (7) aufweist, welche mindestens eins der Nummer, Dimension und Form der Löcher (25, 25', 26) erkennen kann, vorhanden in teilenden Bereichen zwischen aufeinanderfolgenden Einzeldosierungen (21) entlang genannte Stütze (2) von Einzelmengen der Patronen (1) gemäß einer der Ansprüche 1 bis 9, wobei genannte Informationserfassungsmittel (7) in operativer Verbindung mit einem Kontrollgerät (8) von genannter Maschine (10) vorhanden sind.

11. Maschine (10) gemäß Anspruch 10 **dadurch gekennzeichnet, dass** genannte Informationserfassungsmittel (7) in einem Bereich stromabwärts am Ausgang der Patrone (1) vorhanden sind, vorzugsweise zwischen genannte Sammelanordnung (3) und dem Antriebsgerät (5), und Lichtmittel (71) umfassen, angepasst zur Beleuchtung der genannten Stütze (2) von Einzelmengen, und Bildsammelmittel (72), angepasst zur Erkennung von mindestens eins der Nummer, Form und Dimension der Löcher (25, 25', 26) in entsprechender Position.

12. Maschine (10) gemäß Anspruch 11 **dadurch gekennzeichnet, dass** genannte Lichtmittel (71) unterhalb oder oberhalb eines Durchgangbereichs von genannter Stütze (2) von Einzelmengen und genannte Bildsammelmittel (72) in direkter Gegenseite von genannten Lichtmitteln (71) vorhanden sind, auf der anderen Seite des genannten Durchgangbereichs.

13. **Verfahren** zur Getränkezubereitung umfassend folgende Schritte:
- Versorgung einer Maschine (10) zur Getränkezubereitung, insbesondere eine Maschine (10) zur Getränkezubereitung, die ein Antriebsgerät (5) aufweist, das um einer waagerechten Achse herum drehen kann und das stromaufwärts von einem Absauggerät (4) angeordnet ist;
- Versorgung einer Patronenversorgung (1) gemäß einer der Ansprüche 1 bis 9 umfassend eine Stütze (2) von Einzelmengen in streifenartiger Form und aufweisend die Mehrzahl von Einzeldosierungen (21);
- Einbau von genannter Patronenversorgung (1) in einer Sammelanordnung (3) von genannter Maschine (10), vorzugsweise mittels von mindestens einer elastischen Aufbewahrung innerhalb genannter Sammelanordnung (3);
- Einbau einer Einzeldosierung (21), die stromabwärts am weitesten von genannter Stütze (2) von Einzelmengen in Interaktion mit einer äußeren Oberfläche von genanntem Antriebsgerät (5) ist,
- Betätigen von genanntem Antriebsgerät (5) in einer Drehungsbewegung versetzend genannte Stütze (2) von Einzelmengen mittels Zugkraft,
- Betätigen der Informationserfassungsmittel (7) vorhanden stromabwärts vom Ausgang von genannter Patronenversorgung (1) und stromaufwärts von genanntem Absauggerät (4) so, um mindestens einen Informationsparameter in binärförmigem Code zu sammeln als eine Funktion von mindestens eins der Nummer, einer Reihenfolge, der Dimension und der Form von den Löchern (25, 25', 26), vorhanden in den teilenden Bereichen zwischen der aufeinanderfolgenden Einzeldosierungen (21), und
- Vermittlung von mindestens einem Informationsparameter zu einem Kontrollgerät (8) von genannter Maschine (10).

14. Verfahren gemäß Ansprüche 13 **dadurch gekennzeichnet, dass** genannter Schritt zur Betätigung von Informationserfassungsmittel (7) nach jeder Betätigung von genanntem Antriebsgerät (5) eingeleitet ist.

15. Verfahren gemäß Ansprüche 13 oder 14 **dadurch gekennzeichnet, dass** die Schritte zu jedem Getränkezubereitungsablauf mittels Drehung von genanntem Antriebsgerät (5) so wiederholt werden, um dem Vorgehen durch eine Position in jeden Betriebsablauf zu entsprechen.

## Revendications

1. **Cartouche d'alimentation** (1) comprenant un paquet abritant un support (2) de portions uniques,
où ledit support (2) de portions uniques est fourni sous une forme de type bande, avec une extension de support (E) et comprenant une pluralité de portions à dose unique (21) contenant au moins une substance comestible,
où ledit support (2) des portions uniques est fourni avec un premier bord en aval (22) à proximité du côté du paquet où la cartouche (1) fournit une ouverture de sortie et
par lequel ledit support (2) de portions uniques présente une pluralité de trous (25, 25', 26) adaptée afin de fournir des zones de transmission de lumière différente relativement au support restant (2) des portions uniques, où ledit support (2) de portions uniques présente une pluralité de trous (25, 25', 26) disposée le long d'un alignement en croix unique au moins dans une première et seconde zone de division, entre des portions successives à dose unique (21), **caractérisé par le fait qu'**au moins l'un desdits trous (25, 25',26) présente au moins un numéro différent, une forme différente ou une dimension différente, dans au moins une partie des dites zones de division entre les portions successives à dose unique (21), afin que lesdits trous (25, 25', 26) fournissent un code lisible par la machine.

2. Cartouche d'alimentation (1) selon la revendication 1, **caractérisée par le fait que** ledit support (2) de portions uniques présente au moins deux trous (25, 25', 26) de formes différentes, y compris un type circulaire (25, 25') et un type polygonal (26), au moins dans la première et dans la seconde zone de division entre les portions successives à dose unique (21).

3. Cartouche d'alimentation (1) selon la revendication 1 ou 2, **caractérisée par le fait que** ledit support (2) de portions uniques présente au moins deux trous (25, 25') de forme similaire et de dimensions différentes, au moins dans une première et dans une seconde zone de division entre les portions successives à dose unique (21).

4. Cartouche d'alimentation (1) selon les revendications 1 à 3, **caractérisée par le fait que** ledit support (2) de portions uniques présente lesdits trous (25, 25', 26) en positions de référence à des distances équidistantes entre eux et **par le fait qu'**au moins une des dites positions ne présente pas de trou (25, 25', 26) dans au moins l'une des dites positions de référence, afin que chaque séquence de trous dans les positions respectives corresponde à une position d'un code de forme binaire.

5. Cartouche d'alimentation (1) selon les revendications 1 à 4, **caractérisée par le fait que** ledit support (2) de portions uniques ne présente pas de trous (25, 25', 26) dans certaines zones de division entre des portions successives à dose unique (21).

6. Cartouche d'alimentation (1) selon les revendications 1 à 5, **caractérisée par le fait que** ledit support (2) de portions uniques présente des trous (25, 25', 26) dans des zones de division, intercalées entre une pluralité de portions successives à dose unique (21).

7. Cartouche d'alimentation (1) selon les revendications 1 à 6, **caractérisée par le fait que** lesdits trous (25, 25', 26) présentent une dimension caractéristique, y compris un diamètre ou une dimension transversale d'au moins 0,5 mm, de préférence d'au moins 1 mm.

8. Cartouche d'alimentation (1) selon les revendications 1 à 7, **caractérisée par le fait que** ledit support (2) de portions uniques présente une largeur (L) comprise entre 40 et 60 mm, de préférence entre 45 et 55 mm et **par le fait que** ledit support (2) de portions uniques présente une pluralité de portions à dose unique (21) d'une longueur (C) entre 40 et 70 mm, de préférence entre 50 et 60 mm.

9. Cartouche d'alimentation (1) selon une quelconque revendication entre 1 et 8, **caractérisée par le fait que** ledit support (2) de portions uniques présente entre 10 et 120 portions à dose unique (21), de préférence entre 20 et 80 portions à dose unique le long d'une extension respective (E) .

10. **Machine (10)** pour la préparation de breuvages, présentant :
- Une disposition de collecte (3) adaptée à la collecte d'au moins un type, de préférence au moins deux types de cartouches d'alimentation (1, 1') aux dimensions différentes, selon une quelconque revendication entre 1 et 9,
- Un dispositif d'actionnement (5) qui peut tirer ledit support (2) des portions uniques
**caractérisé par le fait que** la machine (10) présente des moyens d'appréhension de l'information (7) pouvant reconnaitre au moins l'un des numéros, dimension et forme des trous (25, 25', 26), fournis dans des zones de division entre les portions successives à dose unique (21) le long dudit support (2) de portions uniques de la cartouche (1) selon une quelconque revendication entre 1 et 9, où lesdits moyens de lecture de l'information (7) sont fournis dans une connexion fonctionnelle avec un dispositif de contrôle (8) de ladite machine (10).

11. Machine (10) selon la revendication 10, **caractérisée par le fait que** lesdits moyens d'appréhension de l'information (7) sont fournis dans une zone en aval à la sortie de la cartouche (1), de préférence entre ledit dispositif de collecte (3) et le dispositif d'actionnement (5) et comprennent des moyens d'éclairage (71) adapté à l'éclairage dudit support (2) des portions uniques, et les moyens de collecte d'image (72) adapté à la reconnaissance d'au moins un numéro, forme et dimension des trous (25, 25', 26) dans chaque position respective.

12. Machine (10) selon la revendication 11, **caractérisé par le fait que** les moyens d'éclairage (71) sont fournis en dessous ou au-dessus de la zone de passage dudit support (2) de portions uniques et lesdits moyens de collecte d'image (72) sont fournis en opposition directe aux dits moyens d'éclairage (71) sur l'autre côté de ladite zone de passage.

13. Processus de préparation d'un breuvage, comprenant les étapes suivantes :
- fournir une machine (10) pour la préparation de breuvages, en particulier une machine (10) pour la préparation de breuvages présentant un dispositif d'actionnement (5) qui peut tourner autour d'un axe horizontal et qui est disposé en amont d'un dispositif d'extraction (4) ;
- fournir une cartouche d'alimentation (1) selon une quelconque revendication entre 1 et 9, comprenant le support (2) de portions uniques sous une forme de type bande et présentant la pluralité de portions à dose unique (21) ;
- Placer ladite cartouche d'alimentation (1) dans une disposition de collecte (3) de ladite machine (10), de préférence au moyen d'au moins une rétention élastique à l'intérieur de ladite disposition de collecte (3) ;
- Placer une portion à dose unique (21) qui est le plus éloigné en aval dudit support (2) des portions uniques en interaction avec une surface extérieure dudit dispositif d'actionnement (5);
- Actionner ledit dispositif d'actionnement (5) dans un mouvement de rotation en déplaçant ledit support (2) de portions uniques par des moyens de traction,
- Actionner des moyens d'appréhension de l'information (7) fournis en aval de la sortie de ladite cartouche d'alimentation (1) et en amont dudit dispositif d'extraction (4), afin de collecter au moins un paramètre d'information sous la forme d'un code binaire comme une fonction d'au moins un des numéros, une séquence, la dimension et la forme des trous (25, 25', 26) fournis dans les zones de division entre les portions successives à dose unique (21), et
- Communiquer au moins un paramètre d'information vers un dispositif de contrôle (8) de ladite machine (10).

14. Processus selon la revendication 13, **caractérisé par le fait que** ladite étape d'actionnement des moyens d'appréhension de l'information (7) est initialisée après chaque actionnement dudit dispositif d'actionnement (5).

15. Processus selon les revendications 13 ou 14, **caractérisé par le fait que** les étapes sont répétées pour chaque cycle de préparation de breuvage, au moyen de la rotation dudit dispositif d'actionnement (5) afin de faire correspondre l'avancement par une position dans chaque cycle d'opération.
